(19) Europäisches Patentamt / European Patent Office / Office européen des brevets

(11) **EP 3 154 021 A1**

(12) **EUROPEAN PATENT APPLICATION**

(43) Date of publication:
**12.04.2017 Bulletin 2017/15**

(51) Int Cl.:
*G06T 5/00* (2006.01)

(21) Application number: **15306605.5**

(22) Date of filing: **09.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
  **92130 Issy-les-Moulineaux (FR)**
• **INRIA - Institut National de Recherche en Informatique et en Automatique**
  **78150 Le Chesnay (FR)**

(72) Inventors:
• **ALAIN, Martin**
  **35576 Cesson-Sévigné (FR)**
• **THOREAU, Dominique**
  **35576 Cesson-Sévigné (FR)**
• **GUILLEMOT, Christine**
  **35042 Rennes Cedex (FR)**
• **GUILLOTEL, Philippe**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR DE-NOISING AN IMAGE USING VIDEO EPITOME**

(57) A method and an apparatus for de-noising an image, and in particular, de-noising an image using video epitome based on a source video image. An embodiment of the present principles provides a method of processing an image in a video, comprising: accessing an encoded version of the image and generating a decoded version of the image; accessing a video epitome associated with the image, wherein the video epitome was extracted from a source version of the image prior to encoding; and generating a de-noised version of the image using the decoded version of the image and the video epitome. The use of the epitome from a source version of the image provides for a high quality epitome for improving the de-noising process.

FIG. 2

**Description**

TECHNICAL FIELD

This disclosure relates to a method and an apparatus for de-noising a video image, more particularly, to a method and an apparatus for de-noising a video image using video epitome based on a source video image.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Patch-based methods have significantly improved the performances of denoising methods. In particular, Non Local Mean (NLM), presented by Buades et al in the article entitled " A non-local algorithm for image denoising " published in the proceedings of CVPR 2005, and Block Matching 3D (BM3D), presented by Dabov et al in the article entitled "Image denoising by sparse 3D transform-domain collaborative filtering" published in Transaction on Image Processing, vol. 16, no. 8, pp. 2080-2095, August 2007, are now reference methods.

For both methods, a patch is de-noised by first looking for its $K$ nearest neighbors ($K$-NN) patches among the noisy image/video. The NLM method combines the $K$-NN using weights that depend on the distance between the $K$-NN and the current patch. The BM3D is a two-step method. In a first step, the BM3D stacks the $K$-NN in a 3D group, and then applies a 3D transform on the group. The patches of the group are then filtered using hard thresholding and the de-noised estimates are obtained after inverse transform. For each pixel, several estimates can be obtained, which are ultimately averaged. In a second step, new $K$-NN are found among the de-noised estimate obtained from the first step. Two 3D groups are formed, containing the $K$-NN from the first de-noised estimate and the corresponding patches in the noisy image/video respectively. A 3D transform is then applied on the two groups. The 3D transformed group containing the noisy patches is filtered using a Wiener filter where the transformed 3D group containing the first de-noised estimates is used as oracle. The final estimate is obtained after inverse transform. These methods are "blind" algorithms, as they are applied on noisy images/videos without any prior knowledge from the source signal. The term "source signal" as applied herein refers to the original video image signal prior to encoding/decoding operations, for example HEVC encoding, prior to transmission and decoding by a television receiver.

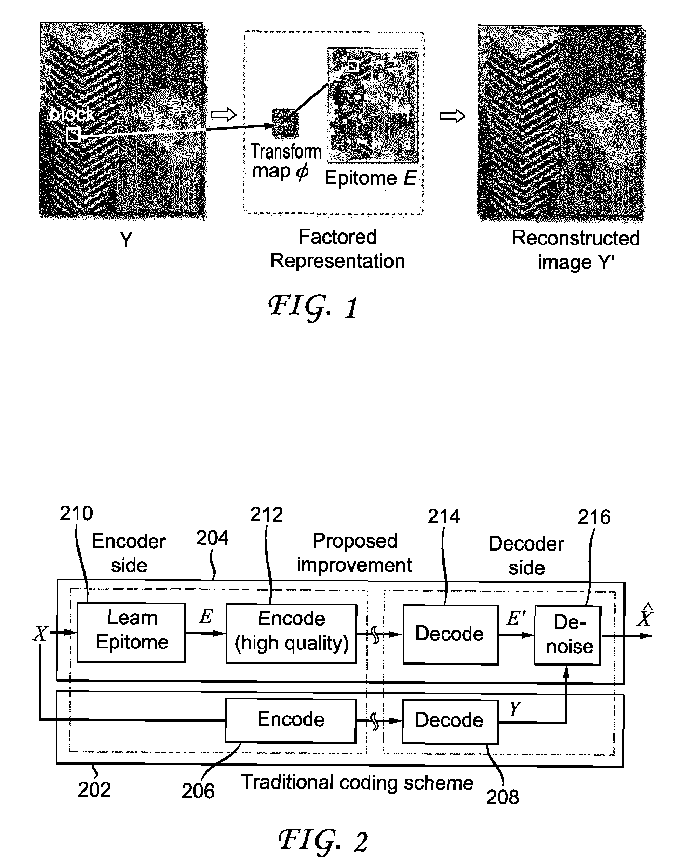

Alternatively, patch-based de-noising methods based on epitomic representations have been designed. An epitome of an image is a condensed representation containing the essence of the textural and structure properties of the image. The epitome approach aims at reducing redundant information (texture) in the image by exploiting repeated content within the image. The epitome principle was first disclosed by Hoppe et al in the article entitled "Factoring Repeated Content Within and Among Images" published in the proceedings of ACM SIGGRAPH 2008 (ACM Transaction on Graphics, vol. 27, no. 3, pp. 1-10, 2008). Figure 1 illustrates the method of Hoppe. From an image Y, a texture epitome E and a transform map Φ are determined such that all image blocks of Y can be reconstructed from matched patches of E. A matched patch is also known as transformed patch. As opposed to blocks, the patches belong to a pixel grid. Once the self-similarities are determined in the image Y, the method of Hoppe determines redundant texture patches to construct epitome charts, the union of all epitome charts constituting the texture epitome E. Each epitome chart represents repeated regions in the image. The construction of an epitome chart is composed of a chart initialization step followed by several chart extension steps. The transform map Φ is an assignation map that keeps track of the correspondences between each block of the image Y and a texture patch of the texture epitome E. The transform map is also known as vector map or assignment map in the literature. With the texture epitome E and the transform map Φ, one is able to reconstruct an image Y' whose content is very similar to the content of the image Y. In the following the term video epitome may refer to either the texture epitome E and the transform map Φ or simply the texture epitome E as appropriate.

Current patch-based de-noising methods either average patches from the epitome as in the article by Cheung et al entitled " Video epitomes " published in the International Journal of Computer Vision, vol. 76, pp. 141-152, 2008, or combine patches using sparse representation as in the article by Aharon et al entitled " Sparse and redundant modeling of image content using image-signature dictionary " published in the SIAM Journal on Imaging Sciences, pp. 228-247, July 2008. In these methods, the epitome is directly extracted from the noisy image/video. It is desirable to improve the performance of de-noising methods using video epitome.

SUMMARY

According to the present principles, a method and an apparatus is described for de-noising an image, and in particular, de-noising an image using video epitome based on a source video image. The extraction of the video epitome from a higher quality version of the image, namely the source version, results in a higher quality video epitome, which improves the de-noising process. The term high or higher quality video as used herein refers to a video image that includes less video artifacts and distortions than a later, or another version, of the video, which has undergone an encoding or compression process.

In accordance with the present principles, there is provided a method of processing an image in a video, comprising: accessing an encoded version of the image and generating a decoded version of the image; accessing a video epitome associated with the image, wherein the video epitome was extracted from a source version of the image prior to encoding; and generating a de-noised version of the image using the decoded version of the image and the video epitome.

In accordance with the present principles, there is provided an apparatus for processing an image of a video, comprising: a communications interface configured to access an encoded version of the image and generating a decoded version of the image, and a video epitome associated with the image, wherein the video epitome was extracted from a source version of the image prior to encoding; and a processor, coupled to the communications interface, and configured to generate an output for display including a de-noised version of the decoded image using the decoded version of the video and the video epitome.

In accordance with the present principles, there is provided an apparatus for processing an image of a video, comprising: a communications interface configured to access an image and a processor, coupled to the communications interface, and configured to generate an encoded version of the image, and extract a video epitome from a source version of the image prior to the encoding, and generate a bitstream including the encoded version of the image, the video epitome, and a flag indicating the presence of the video epitome in the bitstream. In an embodiment, the video epitome is also encode, using either the same or different encoding method as the encoded image.

In an embodiment, the epitome is a texture epitome and the generating step comprises: determining K nearest neighbor patches to be used in de-noising a current patch in the decoded image; accessing corresponding patches located in the video epitome that correspond to the determined K nearest neighbor patches; and denoising the current patch using the corresponding patches located in the video epitome.

In an embodiment, the de-noising comprises performing a Non Local Means method of de-noising using the video epitome.

In an embodiment, the de-noising comprises setting a filtering parameter by estimating a noise level as the mean squared error between the epitome patches and the corresponding noisy patches, wherein the filtering parameter is set as a product of the estimated noise level and a pre-defined user parameter.

In an embodiment, the de-noising comprises using a hard thresholding step and a Wiener filtering step. In an embodiment, the hard thresholding comprises adaptively choosing the threshold by: performing a 3D transform on a group of noisy patches and their corresponding epitome patches; determining a thresholding rule between the transformed patches; substituting the current patch in a patch of the group of noisy patches; applying the thresholding rule to the group of noisy patches including the current patch, and performing an inverse transform to generate a first de-noised version of the current patch. In an embodiment, the first de-noised version of the current patch is used as oracle for the Wiener filtering step.

In an embodiment, the video epitome and the encoded version of the image are accessed via a bitstream received over a communications channel, and wherein the video epitome is encoded, and the bitstream includes a flag indicating that the video epitome is included with the encoded version of the image.

BRIEF DESCRIPTION OF THE DRAWINGS

The above-mentioned and other features of the present principles, and the manner of attaining them, will become more apparent and the present principles will be better understood by reference to the following description of exemplary embodiments taken in conjunction with the accompanying drawings, wherein

Fig. 1 is a pictorial example of the construction of an epitome from an image Y and reconstruction of image Y' using the factored representation consisting of a transform map $\Phi$ and Epitome E;

Fig. 2 is a pictorial example of de-noising according to the present principles;

Fig. 3 is a pictorial example of epitome based de-noising with adapted NLM according to the present principles;

Fig. 4 is a pictorial example of hard thresholding for epitome based de-noising using BM3D according to the present principles;

Fig. 5 is a pictorial example of Wiener filtering for epitome based de-noising using BM3D according to the present principles;

Fig. 6 is pictorial example of epitomes extracted from key frames of a video;

Fig. 7 is a pictorial example illustrating encoding of an epitome in a scalable compression scheme;

Fig. 8 illustrates a block diagram depicting an exemplary system in which various aspects of the exemplary embodiments of the present principles may be implemented;

FIG. 9 illustrates a block diagram depicting an example of a video processing system that may be used with one or more implementations; and

FIG. 10 illustrates a block diagram depicting another example of a video processing system that may be used with one or more implementations.

The description set out herein illustrate exemplary embodiments for implementing various aspects of the present principles. Such examples are not to be construed as limiting the scope of the claims in any manner

## DETAILED DESCRIPTION

The present principles relate to a method and apparatus for de-noising using video epitome. In particular, the embodiments according to the present principles use video epitomes extracted from a source video image during the de-noising process to improve the de-noising performance at the decoder. The extraction of the video epitomes can be part of pre-processing of the image in the video prior to the encoding. Since the source video image is the image before any encoding, or compression, is performed and usually prior to, for example transmission to a receiver device, the source video image is generally at a higher quality than an encoded and subsequently decoded version of the image, and thus, the extracted video epitome will also be at a higher quality level than video epitome extracted from an image that has been previously encoded and decoded. The embodiments according to the present principles are contrary to the state of the art methods in which epitome(s) extracted from the noisy decoded image is used for de-noising.

A pictorial illustration of de-noising in accordance with the present principles is shown in Fig. 2. The traditional coding/decoding scheme is shown in the lower box 202, wherein a video image $X$ is encoded 206 using a particular coding scheme, such as HEVC or VP9, and transmitted to a receiver via a transmission channel. The encoding generally removes redundancies in the image signal and involves three main steps: prediction, transform, and coding. The decoder receives the encoded signal and performs various decoding operations 208 that generally correspond to the inverse of the encoding steps to generate an output image $Y$. Embodiments according to the present principles adds a de-noising scheme to the traditional coding/decoding scheme as indicated by proposed improvements 204. According to the present principles, an epitome E is extracted 210 from the high quality source image $X$ and subsequently encoded 212 for transmission along with the encoded image. At the decoder side, the encoded epitome E is decoded 214 and applied to the decoded image $Y$ to provide a de-noised image $\hat{X}$. The inclusion of a high quality epitome extracted from the source image as in the present embodiments may be signaled by flags or high level syntax elements in the bitstream, for example, using a one bit flag in a header field of a compressed video bitstream. Such signaling informs the decoder that such an epitome is available for de-noising operations.

Previous methods for constructing an epitome from an image are known and may be used in connection with the present embodiments. For example, one suitable method is described in "Method and Apparatus for Constructing an Epitome from an Image," Alain, et al., US 2015/0215629, published July 30,2015, which is incorporated by reference herein. As described therein, the method generates a texture epitome E and a transform map $\phi$. A transform map is necessary if we want to reconstruct the image from the epitome. The present principles are directed to using a video epitome for de-noising, and not necessarily for reconstructing the image, and as such, the present principles only need to use the texture epitome E, even if the transform map is included with the bitstream.

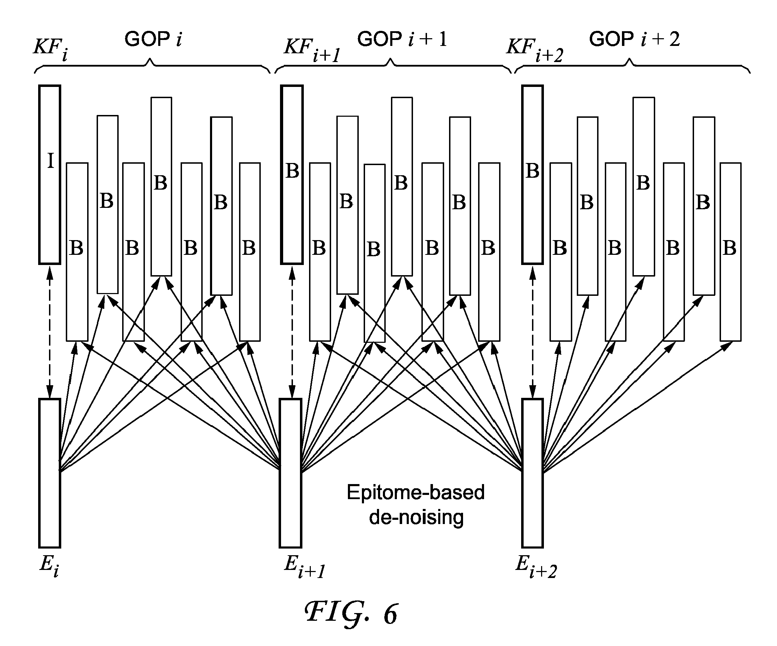

Extraction of epitomes from key frames of a video is shown in Fig. 6. Here, we defined the key frames as the first frame of a group of pictures (GOP). Other criteria may be used in defining a key frame, for example, key frames could be defined by a user in a configuration file A GOP in this example consists of 8 frames, and according to the present principles, any frame within the GOP may be de-noised using epitomes from surrounding frames. For example, Epitome E$i$ is generated from the I frame of GOP$i$, and then used in conjunction with Epitome E $i+1$ to de-noise the B frames of GOP *i*. However, it is clear that other arrangements, or combinations, of epitomes extracted from different frames may be applied to different frames or combination of frames to provide the de-noising.

To perform the de-noising, we consider $N \times N$ overlapping patches. To limit the complexity, not all the overlapping patches are processed, but instead we define a step *s* in both rows and columns between two processed patches. Pixels in the overlapped regions belong to several patches, and thus have several de-noised estimates at the end of the de-noising process. These estimates are averaged in order to obtain the final de-noised values. The method comprises the following steps: 1) search for the *K*-NN of the current patch among the noisy patches co-located with the epitome patches; 2) Learn a de-noising rule between the noisy *K*-NN patches and the corresponding high quality patches in the epitome; and 3) Apply the previous learned de-noising rule on the current patch to obtain the de-noised patch. Several "de-noising rules" are further described below.

**Epitome based NLM**

A de-noising method using NLM is now described. Let *y* be the current patch to be de-noised. We note $y_i$, *i* = 1... *K* the *K*-NN of *y*. The corresponding high quality patches from the epitome are denoted $x_i$, *i* = 1... *K*. From *y* and its *K*-NN, we compute a set of weights $w_i$, *i* = 1... *K*. The de-noised estimate patch $\hat{x}$ is obtained as the linear combination of the *K* high quality patches:

$$\hat{x} = \frac{\sum_{i=1}^{K} w_i * x_i}{\sum_{i=1}^{K} w_i} \qquad \text{Equation 1}$$

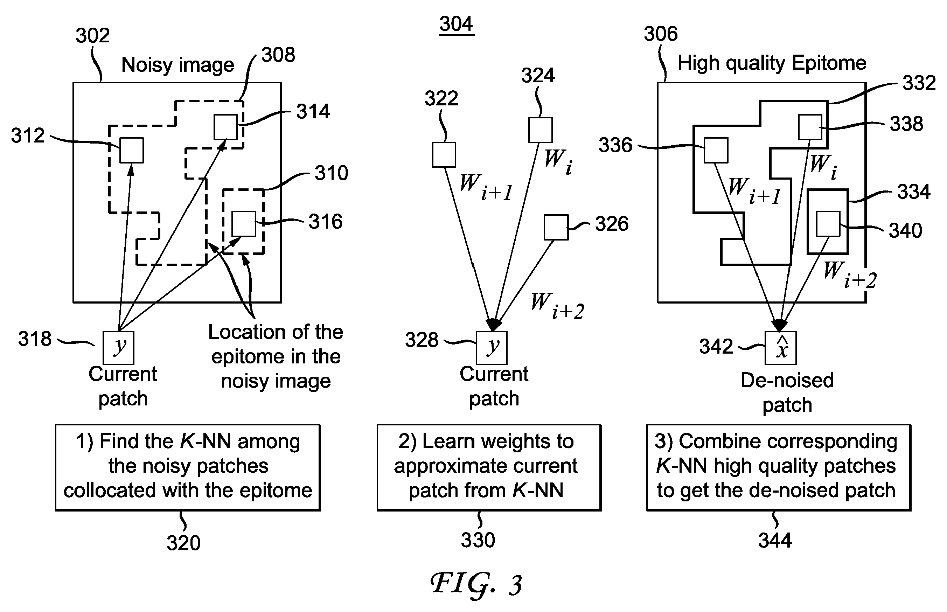

This method of de-noising a current patch 318 is illustrated in Figure 3. Current patch 318 is an arbitrary patch located in the noisy image and which we wish to de-noise. In step 320 we find the K-NN among the noisy patches co-located with the epitome, e.g. using a full search block matching (BM) algorithm. Alternatively, approximate nearest neighbors (ANN) search algorithm could be used, such as the generalized PatchMatch algorithm, presented in the article by Barnes et al entitled "The generalized PatchMatch correspondence algorithm" published in Lecture Notes in Computer Science, vol. 6313 LNCS, pp. 29-4., 2010. Here, noisy image 302 corresponds to the decoded image prior to the de-noising operation. The locations in the noisy image 302 that correspond to the locations of the high quality image 306, from which the epitomes were extracted, is designated by reference numerals 308 and 310 and correspond to areas 332 and 334. Patches 312, 314 and 316 lie within the epitome locations 308 and 310 of the noisy image and their locations correspond to patches 336, 338 and 340 of high quality epitome 332 and 334. In step 330, we learn the weights to approximate the current patch 328 from the noisy K-NN patches 322, 324 and 326. To compute the weights we adapt the NLM algorithm and use exponential weights depending on the distance between *y* and its *K*-NN, that is patches 322, 324 and 326. We note $d_i = \frac{\|y - y_i\|_2^2}{N^2}$, where $d_i$ represents the distance between *y* and its NNyi , and $N^2$ represents the number of pixels in a patch and the weights are then computed as:

$$w_i = e^{-\frac{d_i}{2 * \sigma_{NLM}^2}}$$

where $\sigma_{NLM}$ is a parameter that acts as a degree of filtering. In the original NLM algorithm $\sigma_{NLM}$ is set empirically, depending on the noise level $\sigma_n$. In the present embodiment, we propose a method to adapt automatically this parameter. The noise level $\sigma_n$ is estimated as the mean squared error between the high quality epitome patches and the corresponding noisy patches. We can then set $\sigma_{NLM} = \alpha * \sigma_n$, where $\alpha$ is a pre-defined user parameter.

In step 344, we combine the corresponding K-NN high quality patches (336, 338 and 340) using Equation 1 to derive the de-noised patch 342.

**Epitome Based BM3D**

In another embodiment, we propose using a method based on BM3D, which consists, as in the original BM3D, of two steps: a hard thresholding step and a Wiener Filtering step, performed on 3D transformed patch groups. However, the present principles can be generally applied to any method based on hard thresholding or Wiener filtering of transform coefficients.

**Hard Thresholding**

An aspect of this step is to choose the threshold. In the original method and for similar algorithms, the threshold is usually set manually and/or empirically. This parameter is usually set depending on the noise level. If the threshold is too large many coefficients are removed and too much information may be lost. Here we propose an adaptive method to choose the threshold.

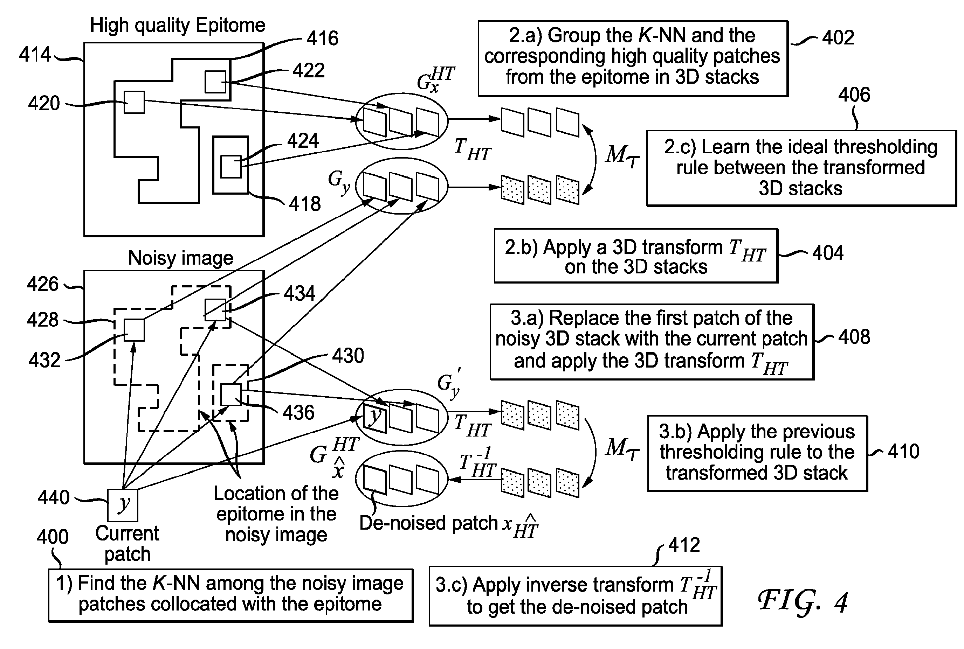

The steps of choosing a threshold is illustrated in Figure 4. In step 400, for a current patch 440, we find the K-NN patches 432, 434 and 436 among the noisy image patches co-located with the patches 420, 422 and 424 in high quality epitome 416 and 424, e.g. using a BM algorithm. This step is similar to step 320 of the previous embodiment. In step 402, the $K$-NN and their corresponding high quality patches 420, 422 and 424 from the epitome are stacked in 3D groups that we denote $\mathbf{G}_y$ and $\mathbf{G}_x^{HT}$ respectively. In step 404, we then apply a 3D transform $T_{HT}$ on both groups. From the two transformed groups we can obtain in step 406 a de-noising rule in the form of a binary 3D mask $\mathbf{M}_\tau$ computed as follow:

$$\mathbf{M}_\tau(\xi) = \begin{cases} 0, & |T_{HT}(\mathbf{G}_x^{HT})(\xi) - T_{HT}(\mathbf{G}_y)(\xi)| > |T_{HT}(\mathbf{G}_x^{HT})(\xi)| \\ 1, & \text{otherwise.} \end{cases}$$

where $\xi$ refers to an index in the 3D matrix. To de-noise the current patch $y$, corresponding to element 440, we replace, in step 408, in $\mathbf{G}_y$ the closest NN of $y$ by the patch $y$ itself, to obtain a 3D group noted $\mathbf{G}_y'$. We can then apply in step 410 the transform $T_{HT}$ to $\mathbf{G}_y'$ followed by the thresholding rule $\mathbf{M}_\tau$, and finally in step 412 we apply the inverse transform to obtain the de-noised group $\mathbf{G}_{\hat{x}}^{HT}$:

$$\mathbf{G}_{\hat{x}}^{HT} = T_{HT}^{-1}(\mathbf{M}_\tau \cdot T_{HT}(\mathbf{G}_y'))$$

Where "·" represents an element-by-element multiplication. The first step de-noised patch $\hat{x}_{HT}$ is then extracted from $\mathbf{G}_{\hat{x}}^{HT}$ at the same position of $y$ in $\mathbf{G}_y'$.

**Wiener Filtering**

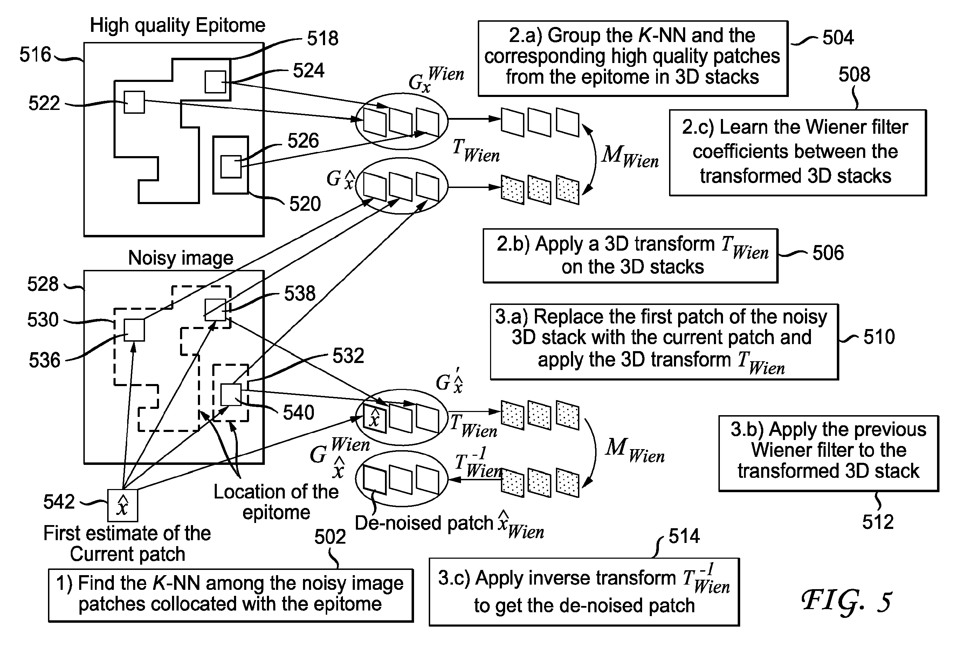

The second step of the BM3D algorithm consists in a Wiener filtering of the 3D transform group where the first de-noised estimate obtained at the previous step of hard thresholding is used as oracle. The optimal Wiener filtering relies on the knowledge of the source signal, so in the original BM3D algorithm the source signal is replaced by a first de-noised estimate, obtained after the hard thresholding step, and is denoted oracle. In the present embodiment, we propose to adapt this step by using the high quality patches from the epitome as oracle for the Wiener filtering. This step is performed on the de-noised estimate obtained at the previous step and not directly on the noisy frames. The steps of the embodiment are illustrated in Figure 5.

In step 502, we first search for the $K$-NN patches 536, 538 and 540 of the current patch $\hat{x}$ among the first estimate patches co-located with the epitome patches 522, 524, and 526 from the two closest key-frames, e.g. using a BM algorithm. In step 504, the $K$-NN patches 536, 538 and 540 and their corresponding high quality patches 522, 524, and 526 from the epitome 518 and 520 are stacked in 3D groups that we denote $\mathbf{G}_{\hat{x}}$ and $\mathbf{G}_x^{Wien}$. These groups are different from the previous step groups $\mathbf{G}_{\hat{x}}^{HT}$ and $\mathbf{G}_x^{HT}$ respectively because the $K$-NN are different. We also compute a third 3D group containing the corresponding noise patches:

$$\mathbf{G}_n = \mathbf{G}_x^{Wien} - \mathbf{G}_{\hat{x}}$$

In step 506 we then apply a 3D transform $T_{wien}$ on both groups. In step 508 we can then compute the Wiener filter coefficients:

$$\mathbf{M}_{Wien} = \frac{\left|T_{Wien}\left(\mathbf{G}_x^{Wien}\right)\right|^2}{\left|T_{Wien}\left(\mathbf{G}_x^{Wien}\right)\right|^2 + \left|T_{Wien}(\mathbf{G}_n)\right|^2}$$

To de-noise the current patch $\hat{x}$, corresponding to element 542, we replace in step 510 in $\mathbf{G}_{\hat{x}}$ the closest NN of $\hat{x}$ by the patch $\hat{x}$ itself, to obtain a 3D group denoted $\mathbf{G}_{\hat{x}}{}'$.

In step 512 we can then apply the transform $T_{Wien}$ to $\mathbf{G}_{\hat{x}}{}'$ followed by the Wiener filtering, and finally in step 514 apply the inverse transform to obtain the de-noised group $\mathbf{G}_{\hat{x}}^{Wien}$:

$$\mathbf{G}_{\hat{x}}^{Wien} = T_{Wien}^{-1}\left(\mathbf{M}_{Wien} \cdot T_{Wien}\left(\mathbf{G}_{\hat{x}}{}'\right)\right)$$

The final de-noised patch $\hat{x}_{Wien}$ is then extracted from $\mathbf{G}_{\hat{x}}^{Wien}$ at the same position of $\hat{x}$ in $\mathbf{G}_{\hat{x}}{}'$.

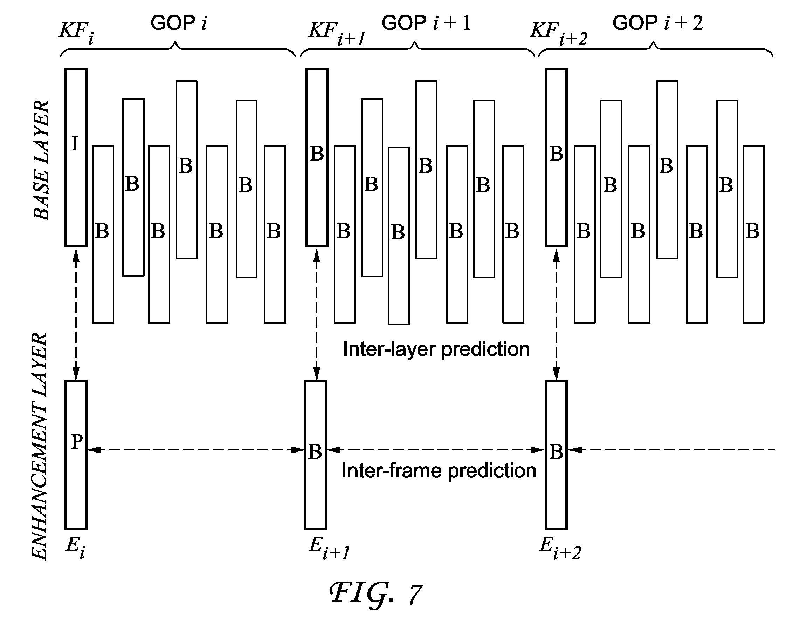

According to the present principles, de-noising may be performed using one or more epitomes generated from the high quality source image, wherein the number and shape of the epitomes may be different based on the extraction method and the image itself. Additionally, the extracted epitomes may be encoded for transmission along with the encoded video image using known encoding methods. The encoding method may be the same, or different, from the encoding methods used for the video images themselves. For example, Fig. 7 shows encoding of epitomes using a scalable compression scheme, e.g., SHVC. In Fig. 7, the encoding of the original image is treated as the base layer and the extracted epitomes are treated as the enhancement layer, wherein for example, epitome Ei is extracted from the I frame of GOPi, epitome Ei+1 is extracted from the first B frame of GOP i+1, and so forth. Coding the source images and the extracted epitomes in this manner allows the present principles to be easily used in connection with scalable video extensions in an existing compression standard.

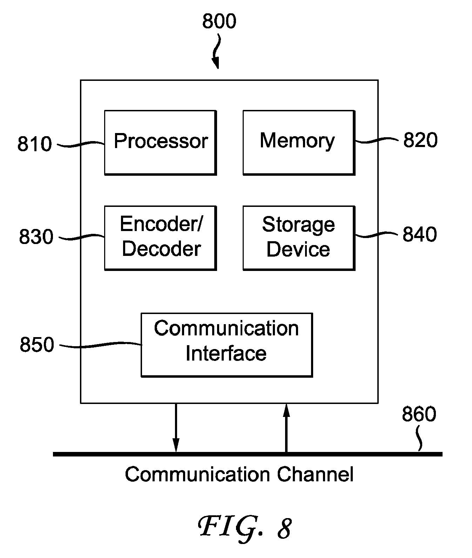

FIG. 8 illustrates a block diagram of an exemplary system in which various aspects of the exemplary embodiments of the present principles may be implemented. System 800 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 800 may be communicatively coupled to other similar systems, and to a display via a communication channel as shown in FIG. 8 and as known by those skilled in the art to implement the exemplary video system described above.

The system 800 may include at least one processor 810 configured to execute instructions loaded therein for implementing the various processes as discussed above. Processor 810 may include embedded memory, input output interface and various other circuitries as known in the art. The system 800 may also include at least one memory 820 (e.g., a volatile memory device, a non-volatile memory device). System 800 may additionally include a storage device 840, which may include non-volatile memory, including, but not limited to, EEPROM, ROM, PROM, RAM, DRAM, SRAM, flash, magnetic disk drive, and/or optical disk drive. The storage device 840 may comprise an internal storage device, an attached storage device and/or a network accessible storage device, as non-limiting examples. System 800 may also include an encoder/decoder module 830 configured to process data to provide an encoded video or decoded video.

Encoder/decoder module 830 represents the module(s) that may be included in a device to perform the encoding and/or decoding functions. As is known, a device may include one or both of the encoding and decoding modules. Additionally, encoder/decoder module 830 may be implemented as a separate element of system 800 or may be incorporated within processors 810 as a combination of hardware and software as known to those skilled in the art. Encoder/Decoder module 830 may, for example, receive data from the communications channel or raw video data to be compressed from a video camera disposed on the device 800. Aspects of the present principles, including the extraction of an epitome from a high quality source image and decoding of a received epitome may be implemented as pre-processing operations prior to, or within, the encoder/decoder 830.

Program code to be loaded onto processors 810 to perform the various processes described hereinabove may be stored in storage device 840 and subsequently loaded onto memory 820 for execution by processors 810. In accordance with the exemplary embodiments of the present principles, one or more of the processor(s) 810, memory 820, storage device 840 and encoder/decoder module 830 may store one or more of the various items during the performance of the processes discussed herein above, including, but not limited to the HDR video, the bitstream, equations, formula, matrices, variables, operations, and operational logic.

The system 800 may also include communication interface 850 that enables communication with other devices via communication channel 860. The communication interface 850 may include, but is not limited to a transceiver configured to transmit and receive data from communication channel 860. The communication interface may include, but is not limited to, a modem or network card and the communication channel may be implemented within a wired and/or wireless medium. The various components of system 800 may be connected or communicatively coupled together using various suitable connections, including, but not limited to internal buses, wires, and printed circuit boards.

The exemplary embodiments according to the present principles may be carried out by computer software implemented by the processor 810 or by hardware, or by a combination of hardware and software. As a non-limiting example, the exemplary embodiments according to the present principles may be implemented by one or more integrated circuits. The memory 820 may be of any type appropriate to the technical environment and may be implemented using any appropriate data storage technology, such as optical memory devices, magnetic memory devices, semiconductor-based memory devices, fixed memory and removable memory, as non-limiting examples. The processor 810 may be of any type appropriate to the technical environment, and may encompass one or more of microprocessors, general purpose computers, special purpose computers and processors based on a multi-core architecture, as non-limiting examples.

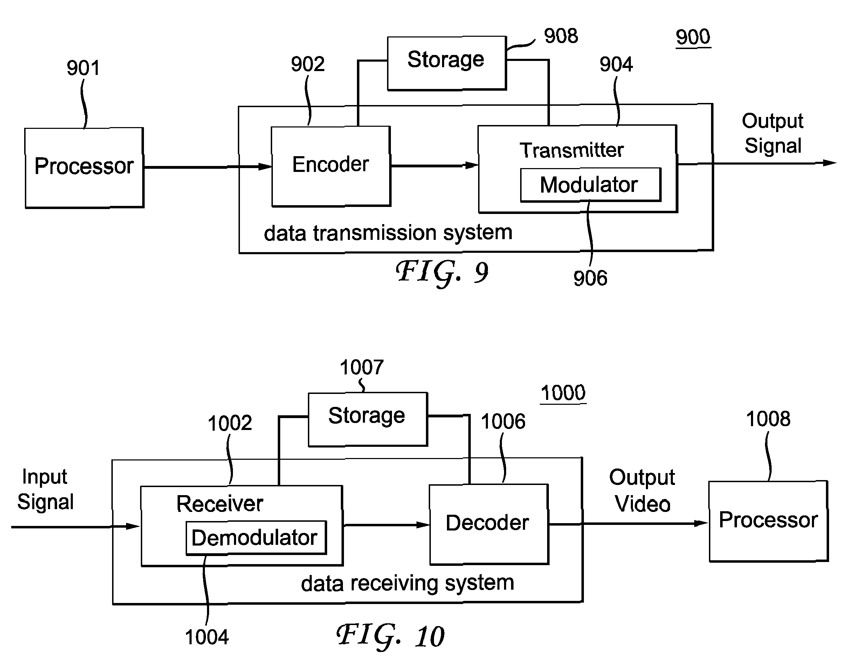

Referring to FIG. 9, a data transmission system 900 is shown, to which the features and principles described above may be applied. The data transmission system 900 may be, for example, a head-end or transmission system for transmitting a signal using any of a variety of media, such as, satellite, cable, telephone-line, or terrestrial broadcast. The data transmission system 900 also may be used to provide a signal for storage. The transmission may be provided over the Internet or some other network. The data transmission system 900 is capable of generating and delivering, for example, video content and other content.

The data transmission system 900 receives processed data and other information from a processor 901. In one implementation, the processor 901 performs forward conversion. The processor 901 may also provide metadata to 900 indicating, for example, the format of the video. The processor 901 may also perform the pre-processing prior to the encoder 902 in accordance with the present principles. The pre-processing may include the extraction of video epitomes as discussed hereinabove.

The data transmission system or apparatus 900 includes an encoder 902 and a transmitter 904 capable of transmitting the encoded signal and the video epitome according to the various embodiments. The encoder 902 receives data information from the processor 901. The encoder 902 generates an encoded signal(s).

The encoder 902 may include sub-modules, including for example an assembly unit for receiving and assembling various pieces of information into a structured format for storage or transmission. The various pieces of information may include, for example, coded or uncoded video, and coded or uncoded elements. As noted above, encoder 902 may encode the video epitome and the video images using the same or different encoding technologies for subsequent transmission. Alternatively, the video epitome may be extracted from the video by the processor and may be encoded prior to the encoder 902. In some implementations, the encoder 902 includes the processor 901 and therefore performs the operations of the processor 901.

The transmitter 904 receives the encoded signal(s) from the encoder 902 and transmits the encoded signal(s) in one or more output signals. The transmitter 904 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 906. The transmitter 904 may include, or interface with, an antenna (not shown). Further, implementations of the transmitter 904 may be limited to the modulator 906.

The data transmission system 900 is also communicatively coupled to a storage unit 908. In one implementation, the storage unit 908 is coupled to the encoder 902, and stores an encoded bitstream, including the video epitome, from the encoder 902. In another implementation, the storage unit 908 is coupled to the transmitter 904, and stores a bitstream from the transmitter 904. The bitstream from the transmitter 904 may include, for example, one or more encoded bitstreams, including video epitomes, that have been further processed by the transmitter 904. The storage unit 908 is, in different implementations, one or more of a standard DVD, a Blu-Ray disc, a hard drive, or some other storage device.

Referring to FIG. 10, a data receiving system 1000 is shown to which the features and principles described above may be applied. The data receiving system 1000 may be configured to receive signals over a variety of media, such as storage device, satellite, cable, telephone-line, or terrestrial broadcast. The signals may be received over the Internet or some other network.

The data receiving system 1000 may be, for example, a cell-phone, a computer, a set-top box, a television, or other device that receives encoded video and provides, for example, decoded video signal for display (display to a user, for example), for processing, or for storage. Thus, the data receiving system 1000 may provide its output to, for example, a screen of a television, a computer monitor, a computer (for storage, processing, or display), or some other storage, processing, or display device.

The data receiving system 1000 is capable of receiving and processing data information. The data receiving system or apparatus 1000 includes a receiver 1002 for receiving an encoded signal, such as, for example, the signals described in the implementations of this application. The receiver 1002 may receive, for example, a signal providing a bitstream, or a signal output from the data transmission system 1000 of FIG. 9.

The receiver 1002 may be, for example, adapted to receive a program signal having a plurality of bitstreams, including video epitomes, representing encoded pictures. Typical receivers perform functions such as, for example, one or more of receiving a modulated and encoded data signal, demodulating the data signal from one or more carriers using a demodulator 1004, de-randomizing the energy in the signal, de-interleaving the data in the signal, and error-correction decoding the signal. The receiver 1002 may include, or interface with, an antenna (not shown). Implementations of the receiver 1002 may be limited to the demodulator 1004.

The data receiving system 1000 includes a decoder 1006. The receiver 1002 provides a received signal to the decoder 1006. The signal provided to the decoder 1006 by the receiver 1002 may include one or more encoded bitstreams. The decoder 1006 outputs a decoded signal, such as, for example, decoded video signals including video information. According to the present principles decoder 1006 may include a pre-processor that separates and processes the encoded video epitome from the encoded video images in the bitstream. The encoded video epitome may be decoded using the same or different decoding processes from the encoded video image.

The data receiving system or apparatus 1000 is also communicatively coupled to a storage unit 1007. In one implementation, the storage unit 1007 is coupled to the receiver 1002, and the receiver 1002 accesses a bitstream from the storage unit 1007. In another implementation, the storage unit 1007 is coupled to the decoder 1006, and the decoder 1006 accesses a bitstream from the storage unit 1007. The bitstream accessed from the storage unit 1007 includes, in different implementations, one or more encoded bitstreams. The storage unit 1007 is, in different implementations, one or more of a standard DVD, a Blu-Ray disc, a hard drive, or some other storage device.

The output data from the decoder 1006 is provided, in one implementation, to a processor 1008. The processor 1008 is, in one implementation, a processor configured for performing post-processing. The post processing may include, for example, the de-noising operations discussed hereinabove. In some implementations, the decoder 1006 includes the processor 1008 and therefore performs the operations of the processor 1008. In other implementations, the processor 1008 is part of a downstream device such as, for example, a set-top box or a television.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of processing an image in a video, comprising:

   accessing an encoded version of the image and generating a decoded version of the image;
   accessing a video epitome associated with the image, wherein the video epitome was extracted from a source version of the image prior to encoding; and
   generating a de-noised version of the image using the decoded version of the image and the video epitome.

2. The method of claim 1, wherein the epitome is a texture epitome and the generating step comprises:

   determining K nearest neighbor patches to be used in de-noising a current patch in the decoded image;
   accessing corresponding patches located in the video epitome that correspond to the determined K nearest neighbor patches; and
   de-noising the current patch using the corresponding patches located in the video epitome.

3. The method of claim 2, wherein the de-noising step comprises performing a Non Local Means method of de-noising using the video epitome.

4. The method of claim 3, wherein the de-noising step comprises setting a filtering parameter by estimating a noise level as the mean squared error between the epitome patches and the corresponding noisy patches, wherein the filtering parameter is set as a product of the estimated noise level and a pre-defined user parameter.

5. The method of claim 2, wherein the de-noising step comprises using a method that includes a hard thresholding step and a Wiener filtering step.

6. The method of claim 5, wherein the hard thresholding step comprises adaptively choosing the threshold by: performing a 3D transform on a group of noisy patches and their corresponding epitome patches; determining a thresholding rule between the transformed patches; substituting the current patch in a patch of the group of noisy patches; applying the thresholding rule to the group of noisy patches including the current patch, and performing an inverse transform to generate a first de-noised version of the current patch.

7. The method of claim 6, wherein the first de-noised version of the current patch is used as oracle for the Wiener filtering step.

8. The method of claim 14, wherein the video epitome and the encoded version of the image are accessed via a bitstream received over a communications channel, and wherein the video epitome is encoded, and the bitstream includes a flag indicating that the video epitome is included with the encoded version of the image.

9. An apparatus for processing an image of a video, comprising:

   a communications interface configured to access an encoded version of the image and generating a decoded version of the image, and a video epitome associated with the image, wherein the video epitome was extracted from a source version of the image prior to encoding; and
   a processor, coupled to the communications interface, and configured to generate an output for display including a de-noised version of the decoded image using the decoded version of the video and the video epitome.

10. The apparatus of claim 9, wherein the epitome is a texture epitome and the processor is configured to generate a de-noised version of the decoded image by:

   determining K nearest neighbor patches to be used in de-noising a current patch in the decoded image;

accessing corresponding patches located in the video epitome that correspond to the determined K nearest neighbor patches; and

de-noising the current patch using the corresponding patches located in the video epitome.

11. The apparatus of claim 10, wherein the processor is configured to perform a Non Local Means method of de-noising using the video epitome.

12. The apparatus of claim 9, wherein the processor is configured to set a filtering parameter by estimating a noise level as the mean squared error between the epitome patches and the corresponding noisy patches, wherein the filtering parameter is set as a product of the estimated noise level and a pre-defined user parameter.

13. The apparatus of claim 12, wherein the processor is configured to de-noise by using a method that includes a hard thresholding step and a Wiener filtering step.

14. The apparatus of claim 13, wherein the processor is configured to perform the hard thresholding step by adaptively choosing the threshold by: performing a 3D transform on a group of noisy patches and their corresponding epitome patches; determining a thresholding rule between the transformed patches; substituting the current patch in a patch of the group of noisy patches; applying the thresholding rule to the group of noisy patches including the current patch, and performing an inverse transform to generate a first de-noised version of the current patch.

15. The apparatus of claim 14, wherein the first de-noised version of the current patch is used as oracle for the Wiener filtering step.

Y          Factored          Reconstructed
           Representation        image Y'

*FIG. 1*

*FIG. 2*

302 — Noisy image
308
314
312
310
316
318 — $y$
Current patch

Location of the epitome in the noisy image

1) Find the K-NN among the noisy patches collocated with the epitome
320

304

322
324
$W_{i+1}$
$W_i$
326
$W_{i+2}$
328 — $y$
Current patch

2) Learn weights to approximate current patch from K-NN
330

306 — High quality Epitome
332
338
336
$W_{i+1}$
$W_i$
334
340
$W_{i+2}$
342 — $\hat{x}$
De-noised patch

3) Combine corresponding K-NN high quality patches to get the de-noised patch
344

*FIG. 3*

EP 3 154 021 A1

FIG. 4

High quality Epitome

516
522
518
524
526
520

$G_x^{Wien}$

2.a) Group the $K$-NN and the corresponding high quality patches from the epitome in 3D stacks — 504

508

$T_{Wien}$

$M_{Wien}$

2.c) Learn the Wiener filter coefficients between the transformed 3D stacks

$G_{\hat{x}}$

Noisy image

528
530
536
538
532
540

Location of the epitome

542 — First estimate of the Current patch $\hat{x}$

2.b) Apply a 3D transform $T_{Wien}$ on the 3D stacks — 506

3.a) Replace the first patch of the noisy 3D stack with the current patch and apply the 3D transform $T_{Wien}$ — 510

$G_{\hat{x}}'$

$T_{Wien}$

$M_{Wien}$

$G_{\hat{x}}^{Wien}$

$T_{Wien}^{-1}$

De-noised patch $\hat{x}_{Wien}$

3.b) Apply the previous Wiener filter to the transformed 3D stack — 512

502

1) Find the $K$-NN among the noisy image patches collocated with the epitome

514

3.c) Apply inverse transform $T_{Wien}^{-1}$ to get the de-noised patch

*FIG. 5*

EP 3 154 021 A1

FIG. 6

FIG. 7

800

810 — Processor

Memory — 820

830 — Encoder/ Decoder

Storage Device — 840

850 — Communication Interface

860

Communication Channel

*FIG. 8*

FIG. 9

FIG. 10

EP 3 154 021 A1

Europäisches
Patentamt

European
Patent Office

Office européen
des brevets

## EUROPEAN SEARCH REPORT

Application Number

EP 15 30 6605

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/067518 A1 (THOMSON LICENSING [FR]) 14 May 2015 (2015-05-14) | 1-3,8-11 | INV.<br>G06T5/00 |
| Y | * abstract *<br>* page 1, line 1 - page 2, last line *<br>* page 4, line 1 - line 9 *<br>* page 9, line 23 - page 10, line 16 *<br>* page 15, line 8 - last line *<br>----- | 4-7,<br>12-15 | |
| Y,D | VINCENT CHEUNG ET AL: "Video Epitomes", INTERNATIONAL JOURNAL OF COMPUTER VISION, KLUWER ACADEMIC PUBLISHERS, BO, vol. 76, no. 2, 23 December 2006 (2006-12-23), pages 141-152, XP019581846, ISSN: 1573-1405<br>* abstract *<br>* page 141, left-hand column, line 1 - page 143, right-hand column, line 20 *<br>* page 146, right-hand column, line 7 - line 28 *<br>* figures 1,2 *<br>----- | 4,12 | |
| Y,D | DABOV K ET AL: "Image Denoising by Sparse 3-D Transform-Domain Collaborative Filtering", IEEE TRANSACTIONS ON IMAGE PROCESSING, IEEE SERVICE CENTER, PISCATAWAY, NJ, US, vol. 16, no. 8, 1 August 2007 (2007-08-01), pages 2080-2095, XP011485829, ISSN: 1057-7149, DOI: 10.1109/TIP.2007.901238<br>* abstract *<br>* page 2080, left-hand column, line 1 - page 2081, left-hand column, line 47 *<br>* page 2082, left-hand column, line 9 - page 2083, right-hand column, line 46 *<br>* figure 3 *<br>----- | 5-7,<br>13-15 | **TECHNICAL FIELDS SEARCHED (IPC)**<br><br>G06T |

-/--

The present search report has been drawn up for all claims

| Place of search | Date of completion of the search | Examiner |
|---|---|---|
| Munich | 11 April 2016 | Klemencic, Ales |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
   after the filing date
D : document cited in the application
L : document cited for other reasons

                                       
& : member of the same patent family, corresponding
   document

EPO FORM 1503 03.82 (P04C01)

Europäisches
Patentamt
European
Patent Office
Office européen
des brevets

# EUROPEAN SEARCH REPORT

Application Number

EP 15 30 6605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/097881 A1 (THOMSON LICENSING [FR]; INST NAT RECH INF AUTOMAT [FR]; CHERIGUI SAFA) 26 July 2012 (2012-07-26) <br> * abstract * <br> * page 1, line 30 - page 2, last line * <br> * page 4, line 3 - line 23 * <br> ----- | 1,9 | |
| Y,D | BUADES A ET AL: "A Non-Local Algorithm for Image Denoising", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, <br> vol. 2, 20 June 2005 (2005-06-20), pages 60-65, XP010817500, DOI: 10.1109/CVPR.2005.38 ISBN: 978-0-7695-2372-9 <br> * the whole document * <br> ----- | 1,9 | |

TECHNICAL FIELDS
SEARCHED (IPC)

The present search report has been drawn up for all claims

| Place of search | Date of completion of the search | Examiner |
|---|---|---|
| Munich | 11 April 2016 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6605

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2016

| Patent document cited in search report | Publication date | Patent family member(s) | Publication date |
|---|---|---|---|
| WO 2015067518 A1 | 14-05-2015 | NONE | |
| WO 2012097881 A1 | 26-07-2012 | CN 103314584 A | 18-09-2013 |
| | | EP 2666290 A1 | 27-11-2013 |
| | | JP 2014504119 A | 13-02-2014 |
| | | KR 20140005260 A | 14-01-2014 |
| | | TW 201233184 A | 01-08-2012 |
| | | US 2014029672 A1 | 30-01-2014 |
| | | WO 2012097881 A1 | 26-07-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150215629 A, Alain

### Non-patent literature cited in the description

- **BUADES et al.** A non-local algorithm for image denoising. *proceedings of CVPR,* 2005
- **DABOV et al.** Image denoising by sparse 3D transform-domain collaborative filtering. *Transaction on Image Processing,* August 2007, vol. 16 (8), 2080-2095
- **HOPPE et al.** Factoring Repeated Content Within and Among Images. *the proceedings of ACM SIGGRAPH 2008 (ACM Transaction on Graphics,* 2008, vol. 27 (3), 1-10
- **CHEUNG et al.** Video epitomes. *the International Journal of Computer Vision,* 2008, vol. 76, 141-152
- **AHARON et al.** Sparse and redundant modeling of image content using image-signature dictionary. *the SIAM Journal on Imaging Sciences,* July 2008, 228-247
- **BARNES et al.** The generalized PatchMatch correspondence algorithm. *Lecture Notes in Computer Science,* 2010, vol. 6313, 29-4